# EUROPEAN PATENT APPLICATION

(11) **EP 4 790 694 A1**
(43) Date of publication of application: **12.08.2026**
(21) Application number: 24885006.7
(22) Date of filing: 01.11.2024
(51) Int. Cl.: G09G 3/32, G06V 40/13

(54) **SUBSTRATE CIRCUIT, ULTRASONIC FINGERPRINT RECOGNITION MODULE, AND ELECTRONIC DEVICE**

(30) Priority: 01.11.2023 CN 202311444709
(71) Applicant: HUAWEI TECHNOLOGIES CO., LTD., Shenzhen, Guangdong 518129 (CN)
(72) Inventor: ZHANG, Cuiping, Shenzhen, Guangdong 518129 (CN); CHI, Shipeng, Shenzhen, Guangdong 518129 (CN); SU, Yue, Shenzhen, Guangdong 518129 (CN)
(74) Representative: MERH-IP Matias Erny Reichl Hoffmann Patentanwälte PartG mbB
(86) International application number: PCT/CN2024/129508
(87) International publication number: WO 2025/093009

(57) **Abstract**

Embodiments of this application provide a substrate circuit, an ultrasonic fingerprint recognition module, and an electronic device, used in the field of display technologies. The substrate circuit includes a row shift register array, a pixel array, and a column shift register array. The row shift register array includes N row shift registers, configured to output a row selection signal. The row shift register operates in at least two different clock cycles. The column shift register array includes M column shift registers, configured to output a column selection signal. The column shift register operates in at least two different clock cycles. The pixel array includes a plurality of pixel circuits in N rows and M columns. Pixel circuits in all the rows are coupled to output ends of all the row shift registers in one-to-one correspondence, and a pixel circuit in each row is configured to receive a row selection signal. Pixel circuits in all the columns are coupled to output ends of all the column shift registers in one-to-one correspondence, and a pixel circuit in each column is configured to receive a column selection signal.

## Description

### TECHNICAL FIELD

This application relates to the field of display technologies, and in particular, to a substrate circuit, an ultrasonic fingerprint recognition module, and an electronic device.

### BACKGROUND

With continuous changes in market requirements, intelligent terminal products are continuously upgraded, and fingerprint recognition technologies are also continuously updated and iterated. So far, fingerprint recognition technologies applied to intelligent terminals are mainly classified into three generations: a capacitive fingerprint recognition technology, an optical fingerprint recognition technology, and an ultrasonic fingerprint recognition technology.

Compared with the capacitive fingerprint recognition technology and the optical fingerprint recognition technology, in the ultrasonic fingerprint recognition technology, an ultrasonic fingerprint module is thin, and may be used in a foldable screen. Under-screen fingerprint recognition is faster, and there is no dazzling due to light leakage and the like. In addition, the ultrasonic fingerprint recognition technology has a strong penetration capability, does not depend on light transmittance of a screen, can implement a liveness detection function and a low-cost and large-area fingerprint recognition function, is not affected by external environments such as water drops and dust particles, and has higher stability. Therefore, the ultrasonic fingerprint recognition technology has more advantages, and is particularly applicable to the field of large-area fingerprint recognition.

In a large-area fingerprint recognition application, user experience can be greatly improved, including: improvement of fingerprint enrollment efficiency, implementation of blind fingerprint unlocking without accurately placing a finger in an unlocking process, a decrease in a miss probability, an increase in a fingerprint recognition rate, and the like.

However, in a large-area ultrasonic fingerprint recognition application, a substrate circuit used to read an ultrasonic fingerprint signal has a problem of low fingerprint signal reading efficiency. How to resolve this problem has become a research hotspot in the industry.

### SUMMARY

Embodiments of this application provide a substrate circuit, an ultrasonic fingerprint recognition module, and an electronic device, to improve fingerprint signal reading efficiency in a large-area ultrasonic fingerprint recognition application.

To achieve the foregoing objective, the following technical solutions are used in this application.

According to a first aspect, an embodiment of this application provides a substrate circuit, including a row shift register array, a pixel array, and a column shift register array. The row shift register array includes N row shift registers, and each of the N row shift registers includes at least one output end, and is configured to output a row selection signal. The row shift register operates in at least two different clock cycles. N is a positive integer. The column shift register array includes M column shift registers, and each of the M column shift registers includes at least one output end, and is configured to output a column selection signal. The column shift register operates in at least two different clock cycles. M is a positive integer. The pixel array includes a plurality of pixel circuits in N rows and M columns. Pixel circuits in all the rows are coupled to output ends of all the row shift registers in one-to-one correspondence, and a pixel circuit in each row is configured to receive a row selection signal of a correspondingly coupled row shift register. Pixel circuits in all the columns are coupled to output ends of all the column shift registers in one-to-one correspondence, and a pixel circuit in each column is configured to receive a column selection signal of a correspondingly coupled column shift register.

The row shift register is configured to control connection of the pixel circuit in each row, and the column shift register is configured to control connection of the pixel circuit in each column, to flexibly configure connection or disconnection of the pixel circuit. Different pixel circuit regions are distinguished in a targeted manner based on a touch range of a fingerprint of a finger, including, in the pixel circuits, a row that needs to be read, a row that does not need to be read, a column that needs to be read, and a column that does not need to be read. In addition, for pixel circuit regions with different read requirements, the row shift register array and the column shift register array use different operating clock cycles, thereby saving a large quantity of timing resources, and implementing efficient reading of large-area fingerprint information.

In a possible design, the substrate circuit further includes a read circuit array, the read circuit array includes a plurality of read circuits in N rows and M columns, and all the read circuits are coupled to all the pixel circuits in one-to-one correspondence. The read circuit reads an electrical signal in a correspondingly coupled pixel circuit under control of the row selection signal and the column selection signal.

In a possible design, in pixel circuits in the N rows, for a row that does not need to be read by the read circuit, an operating clock cycle of the row shift register is t0; and in the pixel circuits in the N rows, for a row that needs to be read by the read circuit, an operating clock cycle of the row shift register is t1, where a value of the clock cycle t0 is less than that of the clock cycle t1. In the pixel circuit region, for the row that does not need to be read, the operating clock cycle of the row shift register is shorter, and for the row that needs to be read, the operating clock cycle of the row shift register is longer. This reduces an unnecessary timing resource waste of the row shift register.

In a possible design, in pixel circuits in the M columns, for a column that does not need to be read by the read circuit, an operating clock cycle of the column shift register is t2; and in the pixel circuits in the M columns, for a column that needs to be read by the read circuit, an operating clock cycle of the column shift register is t3, where a value of the clock cycle t2 is less than that of the clock cycle t3. In the pixel circuit region, for the column that does not need to be read, the operating clock cycle of the column shift register is shorter, and for the column that needs to be read, the operating clock cycle of the column shift register is longer. This reduces an unnecessary timing resource waste of the column shift register.

In a possible implementation, the substrate circuit is a thin-film field effect transistor TFT substrate circuit, and each switching transistor is a thin-film field effect transistor TFT; or the substrate circuit is a metal oxide transistor CMOS substrate circuit, and each switching transistor is a metal oxide transistor CMOS. In this embodiment of this application, an effective substrate circuit and a corresponding switching transistor type are provided. The TFT substrate circuit corresponds to the TFT switching transistor, and the CMOS substrate circuit is better applicable to various application scenarios.

In a possible design, the pixel circuit includes a first electrode, a plurality of transistors, and a PVDF piezoelectric thin film.

In a possible design, the row shift register includes a flip-flop, a NAND gate, and an inverter.

In a possible design, a coupling manner of a circuit structure of the column shift register is consistent with a coupling manner of a circuit structure of the row shift register.

In a possible design, an operating phase of the pixel circuit is divided into an ultrasonic wave emitting phase, an ultrasonic wave receiving phase, and a signal reading phase.

In a possible design, in the signal reading phase of the pixel circuit, when both the row selection signal of the row shift register and the column selection signal of the column shift register are valid, the read circuit reads the electrical signal in the correspondingly coupled pixel circuit.

According to a second aspect, an embodiment of this application provides an ultrasonic fingerprint recognition module, including the substrate circuit according to the first aspect and an adhesive layer. The adhesive layer is coupled to the substrate circuit.

According to a third aspect, an embodiment of this application further provides an electronic device, including the ultrasonic fingerprint recognition module according to the second aspect and a display. When recognizing a touch operation on the display, the electronic device recognizes fingerprint information via the ultrasonic fingerprint recognition module.

It should be understood that, for beneficial effect of the ultrasonic fingerprint recognition module provided in the second aspect of this application and the electronic device provided in the third aspect of this application, refer to the substrate circuit provided in the first aspect. Details are not described herein again.

### BRIEF DESCRIPTION OF DRAWINGS

FIG. 1 is a diagram of an example of a structure of an electronic device according to an embodiment of this application;
FIG. 2 is a diagram of an example of a structure of an ultrasonic fingerprint recognition module according to an embodiment of this application;
FIG. 3 is a diagram of an example of a structure of a substrate circuit of an ultrasonic fingerprint recognition module according to an embodiment of this application;
FIG. 4a is a diagram of an example of a timing signal of a column selection circuit according to an embodiment of this application;
FIG. 4b is a diagram of an example of a timing signal of a gate driver on array GOA according to an embodiment of this application;
FIG. 5 is a diagram of another example of a structure of a substrate circuit of an ultrasonic fingerprint recognition module according to an embodiment of this application;
FIG. 6 is a diagram of an example of a structure of a pixel circuit according to an embodiment of this application;
FIG. 7 is an operating flowchart of an example of a large-area fingerprint reading process according to an embodiment of this application; and
FIG. 8 is a diagram of an example of timing resource allocation of a row shift register according to an embodiment of this application.

### DESCRIPTION OF EMBODIMENTS

It should be noted that in embodiments of this application, terms such as "first" and "second" are merely used to distinguish between features of a same type, and cannot be understood as an indication of relative importance, a quantity, a sequence, or the like.

In embodiments of this application, the word like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word like "example" or "for example" is intended to present a related concept in a specific manner.

The terms "coupling" and "connection" in embodiments of this application should be understood in a broad sense. For example, the term may be physical direct connection, or may be indirect connection implemented through an electronic component, for example, connection implemented through a resistor, an inductor, a capacitor, or another electronic component.

First, some basic concepts in embodiments of this application are explained and described.

PVDF piezoelectric thin film: is a soft, light, and high-toughness plastic film, and can be made into components of various shapes and thicknesses as required. When combined with microelectronics technologies, the PVDF piezoelectric thin film can support multi-functional sensing components. The PVDF piezoelectric thin film has unique dielectric effect, piezoelectric effect, and thermoelectric effect. Compared with conventional piezoelectric materials (such as ceramic piezoelectric sheets), the PVDF piezoelectric thin film features a wide frequency response, a large dynamic range, high sensitivity of force point conversion, good mechanical performance, high mechanical strength, and easy matching of acoustic impedance, is lightweight, soft, non-brittle, and impact-resistant, is not easily contaminated by water and chemicals, and is easily made into sheets or pipes of any shape and area.

TFT: is short for a thin film transistor, which is a selection switching transistor implemented based on a thin film material. It is commonly used in the semiconductor display industry, and is similar to a metal oxide semiconductor field effect transistor (Metal Oxide Semiconductor Field Effect Transistor, MOSFET) used in an integrated circuit. The TFT is usually a three-end device, including a gate (Gate), a source (Source), and a drain (Drain). The TFT is usually used as a "voltage-controlled current" device. One of most significant features of the TFT is that a current (Ids) between the source and the drain can be adjusted by adjusting a potential difference (Vgs) between the gate and the drain, to implement connection or disconnection between the source and the drain.

Classification of a TFT device: Currently, the most commonly used classification method is to classify the TFT device based on a type of a material used for a TFT active layer, that is, a semiconductor layer. There are roughly four types of TFTs: (1) amorphous silicon hydride TFT (a-Si:H TFT), (2) metal oxide TFT (Metal Oxide TFT, Oxide TFT for short), (3) organic TFT (Organic TFT, OTFT for short), and (4) low-temperature polycrystalline silicon TFT (LTPS TFT).

TFT circuit: Various circuit functions can be implemented through circuit connection between a plurality of TFTs and based on proper voltage drive timing. One of the most significant advantages of the TFT is that the TFT can be manufactured on a glass substrate or even a flexible substrate. This is also a common production manner in the semiconductor display industry, and can implement a large-area and high-precision graphics process. Compared with a conventional silicon-based integrated circuit chip that usually needs to be manufactured on a small-sized and high-purity silicon wafer, the glass-based TFT is a low-cost and high-precision integrated electronic circuit production manner.

Ultrasonic fingerprint recognition technology: Different interfaces formed by fingerprints on a surface of a sensor are mainly used. When an ultrasonic wave reaches the interfaces, echo energy of the ultrasonic wave at the interfaces is different because acoustic impedance of interface media is different. Then, an ultrasonic fingerprint recognition module detects electrical signals generated by the different echo energy, to obtain information about a ridge line of the fingerprint and information about a valley line of the fingerprint, thereby implementing fingerprint detection.

An embodiment of this application provides an electronic device. The electronic device is, for example, a consumer electronic product, a home electronic product, a vehicle-mounted electronic product, a financial terminal product, or a communication electronic product. The consumer electronic product is, for example, a mobile phone (mobile phone), a tablet computer (pad), a notebook computer, an e-reader, a personal computer (personal computer, PC), a personal digital assistant (personal digital assistant, PDA), a desktop display, an intelligent wearable product (for example, a smart watch or a smart band), a virtual reality (virtual reality, VR) terminal device, an augmented reality (augmented reality, AR) terminal device, or an uncrewed aerial vehicle. The home electronic product is, for example, a smart door lock, a television, a remote control, a refrigerator, and a small household charging appliance (for example, a soy milk maker or a robot vacuum). The vehicle-mounted electronic product is, for example, a vehicle-mounted navigator or a vehicle-mounted high-density digital video disc (digital video disc, DVD). The financial terminal product is, for example, an automated teller machine (automated teller machine, ATM) or a terminal for self-help service handling. The communication electronic product is, for example, a communication device like a server, a memory, a radar, or a base station.

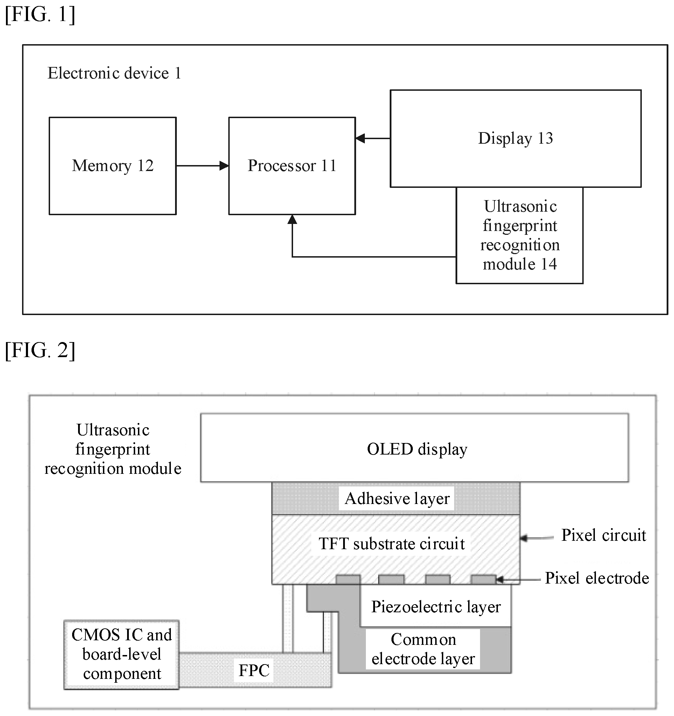

FIG. 1 is a block diagram of a structure of an electronic device according to embodiment of this application. The electronic device 1 may include one or more of the following components: a processor 11, a memory 12, a display 13, and an ultrasonic fingerprint recognition module 14.

The processor 11 may include one or more processing cores. The processor 11 is connected to all parts in the entire electronic device 1 through various interfaces and lines, and performs various functions of the electronic device 1 and processes data by running or executing instructions, a program, a code set, or an instruction set stored in the memory 12 and invoking data stored in the memory 12. For example, the processor 11 may be implemented in at least one hardware form of a digital signal processor (digital signal processor, DSP), a field-programmable gate array (field-programmable gate array, FPGA), or a programmable logic array (programmable logic array, PLA). The processor 11 may integrate one or a combination of a central processing unit (central processing unit, CPU), a graphics processing unit (graphics processing unit, GPU), a neural-network processing unit (neural-network processing unit, NPU), an application processor (application processor, AP), a modem (modem), and the like. The CPU mainly processes an operating system, a user interface, an application, and the like. The GPU is configured to be responsible for rendering and drawing content that needs to be displayed on the display 13. The NPU is configured to implement an artificial intelligence (artificial intelligence, Al) function. The modem is configured to process wireless communication. It may be understood that the modem may alternatively not be integrated into the processor 11, and is implemented through a chip alone.

The memory 12 may include a random access memory (random access memory, RAM), or may include a read-only memory (read-only memory, ROM). For example, the memory 12 includes a non-transitory computer-readable storage medium (non-transitory computer-readable storage medium), and the memory 12 may be configured to store instructions, a program, code, a code set, or an instruction set. The memory 12 may include a program storage region and a data storage region. The program storage region may store instructions used to implement an operating system, instructions used to implement at least one function (for example, a touch function, a sound playing function, and an image playing function), instructions used to implement method embodiments of this application, and the like. The data storage region may store data (for example, audio data and a phone book) created based on use of the electronic device 1.

The display 13 is configured to display an image and a video. The display may be designed as a bezel-less screen, a curved screen, an irregular-shaped screen, a double-sided screen, or a foldable screen, or may be designed as a combination of a bezel-less screen and a curved screen, or a combination of an irregular-shaped screen and a curved screen. It should be noted that a material of the display 13 is not specifically limited in embodiments of this application. For example, the display may be a quantum dot light emitting diode (quantum dot light emitting diode, QLED) display apparatus, or may be an active-matrix organic light emitting diode (active-matrix organic light emitting diode, AMOLED) display apparatus.

The ultrasonic fingerprint recognition module 14 is configured to: recognize fingerprint information, to unlock the electronic device; or slide with various gestures and touch actions of a finger on the display, to control the electronic device. The ultrasonic fingerprint recognition module 14 may be attached to a lower part of a target region in the display 13, and a size of the ultrasonic fingerprint recognition module 14 may be slightly greater than or equal to that of the target region. The ultrasonic fingerprint recognition module 14 is configured to send an ultrasonic wave to recognize fingerprint information of a user.

It should be further noted that the ultrasonic fingerprint recognition module 14 is coupled to the lower part of the display 13 via an adhesive layer. For example, the ultrasonic fingerprint recognition module 14 may alternatively be coupled to a lower part of another cover plate layer like a glass cover plate or a metal cover plate via an adhesive layer. The ultrasonic fingerprint recognition module 14 may alternatively be disposed inside a cover plate. A material of the cover plate is not specifically limited in embodiments of this application.

It should be further noted that the ultrasonic fingerprint recognition module 14 in this embodiment of this application may further directly perform fingerprint recognition without being packaged or covered. For example, when the ultrasonic fingerprint recognition module is not packaged or covered by the display or the cover plate, that is, when the ultrasonic fingerprint recognition module is disposed on a substrate and is directly exposed to a finger of the user, the ultrasonic fingerprint recognition module may perform fingerprint recognition.

In addition, the ultrasonic fingerprint recognition module 14 provided in this embodiment of this application may further be used in various scenarios in which a palm print or even a foot print is recognized via an ultrasonic wave. For example, the ultrasonic fingerprint recognition module 14 under the display is used in a clock-in/out machine to perform palm print recognition to complete clock-in/out. This is not specifically limited in embodiments of this application.

In some embodiments, FIG. 2 is a diagram of a structure of the ultrasonic fingerprint recognition module 14. Core modules of the ultrasonic fingerprint recognition module 14 include pixel electrodes, a piezoelectric layer, a substrate circuit, and the like.

The pixel electrode is located between the piezoelectric layer and the substrate circuit (namely, a pixel circuit). In an existing technical solution, the pixel electrode may be an indium tin oxide (ITO) electrode, a spacing in the pixel electrode is about 75 µm, and a spacing between two adjacent ITO electrodes is about 5 µm.

A piezoelectric material of the piezoelectric layer may be a material having piezoelectric effect, like polyvinylidene difluoride PVDF. When the piezoelectric material polyvinylidene difluoride PVDF is subjected to stress, an internal polar crystal is deformed, and electric dipoles are arranged in a specific direction. As a result, effect of induced charges is generated because positive and negative charge centers in the piezoelectric material no longer overlap. This is usually referred to as direct piezoelectric effect. In contrast, if a voltage is input to a functional layer of the piezoelectric material polyvinylidene difluoride PVDF, tension and shrinkage are generated in the piezoelectric material based on a direction of an electric field, and vibration is generated. This is referred to as inverse piezoelectric effect. An ultrasonic fingerprint recognition technology implements fingerprint recognition based on the direct and inverse piezoelectric effect of the piezoelectric material.

When the finger is placed on a surface of an OLED display, the ultrasonic fingerprint recognition module 14 starts to operate. A specific high-frequency voltage signal is input to the functional layer of the piezoelectric material polyvinylidene difluoride PVDF, to excite the piezoelectric material polyvinylidene difluoride PVDF to periodically vibrate up and down at a high frequency, and emit an ultrasonic wave. The ultrasonic wave passes through the screen and reaches the finger on the surface of the OLED display.

Because a fingerprint of the finger has a valley line and a ridge line, when the finger is in contact with the OLED display, a ridge line region is closely attached to the OLED display, and an air layer exists in a valley line region. When the ultrasonic wave reaches a position of the finger, different reflection effect is generated due to different contact object media (the finger or the air layer). The finger in the ridge line region absorbs a part of the ultrasonic wave and reflects a part of the ultrasonic wave, and the air layer in the valley line region reflects almost all of the ultrasonic wave. Therefore, ultrasonic echoes reflected by the finger in the ridge line region and the air layer in the valley line region have different strength. The reflected ultrasonic echoes of the different strength pass through the OLED display again, reach the piezoelectric layer, and excite the piezoelectric material polyvinylidene difluoride PVDF of the piezoelectric layer to generate induced charges. In this case, because the ultrasonic echoes reflected in the ridge line region and the valley line region have different energy, the induced charges generated by the piezoelectric material polyvinylidene difluoride PVDF of the piezoelectric layer are also different.

These different induced charges are processed by the substrate circuit to generate a fingerprint grayscale image. Effective fingerprint recognition can be implemented by comparing the fingerprint grayscale image with existing fingerprint data.

Based on this, the substrate circuit is used as the most critical module in the ultrasonic fingerprint recognition module 14, and a specific circuit structure design of the substrate circuit has always been a research hotspot in the industry.

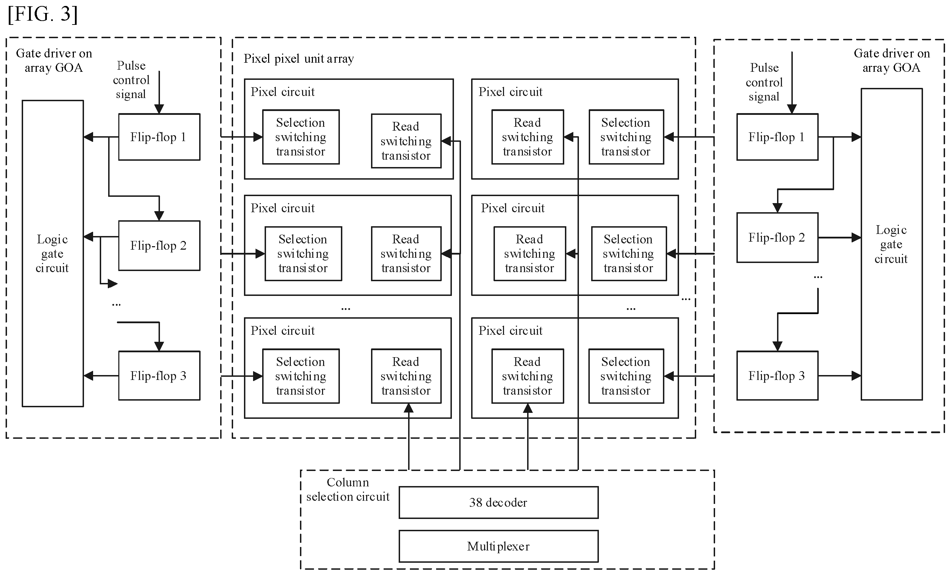

Currently, in some embodiments, a structure of the substrate circuit of the ultrasonic fingerprint recognition module 14 is shown in FIG. 3, and includes a pixel pixel unit array, a gate driver on array, and a column selection circuit.

A region in which the pixel pixel unit array is located is an induction region of the fingerprint of the finger. In an ultrasonic echo receiving phase, the pixel pixel unit array converts a received ultrasonic echo signal into an electrical signal, and the gate driver on array and the column selection circuit sequentially control signal reading of the pixel pixel unit array, to finally implement fingerprint information collection.

The pixel pixel unit array includes a plurality of pixel circuits in several rows and several columns, and each of the plurality of pixel circuits includes a selection switching transistor and a read switching transistor. The pixel circuit is connected when and only when the selection switching transistor and the read switching transistor that are in the pixel circuit are simultaneously turned on. A control signal output by the gate driver on array is used to control selection switching transistors of pixel circuits in each row, that is, selection switching transistors of pixel circuits in a same row are controlled via a same control signal output by the gate driver on array. A control signal output by the column selection circuit is used to control read switching transistors of pixel circuits in each column, that is, read switching transistors of pixel circuits in a same column are controlled via a same control signal output by the column selection circuit.

In the gate driver on array (Gate Driver On Array, GOA), in large-area fingerprint reading application, the pixel pixel array includes tens of thousands or even hundreds of thousands of pixel circuits. For so many pixel circuits, parallel data collection cannot be performed on the pixel circuits in all rows at a same moment. Therefore, partitioning needs to be performed based on specific operating timing, to implement serial data collection.

A specific operating principle is as follows: Each pixel circuit in the pixel pixel unit array includes several selection switching transistors. The gate driver on array GOA provides a gate control signal for the selection switching transistor in the pixel circuit. Under the action of the gate control signal output by the gate driver on array GOA, the selection switching transistor switches between an on state and an off state, and the on state and the off state of the selection switching transistor affect connection and disconnection of the pixel circuit in this row. Another factor that affects connection and disconnection of the pixel circuit is the read switching transistor. Specifically, the gate driver on array GOA may perform row-by-row scanning driving on the pixel circuits in the pixel pixel unit array, and determine which row of pixel circuits in the pixel pixel unit array are connected and which row of pixel circuits are disconnected.

The gate driver on array GOA includes a plurality of flip-flops and several logic gate circuits. First, under the joint action of control signals of an external circuit such as an initial signal and a clock signal, a row-by-row shifting pulse control signal is generated. The pulse control signal is sent to the gate driver on array GOA. Under the action of the pulse control signal, the gate driver on array GOA starts to perform row-by-row scanning driving on the pixel circuits in the pixel pixel unit array from a pixel circuit in a first row to a pixel circuit in a last row. A flip-flop in a row to which the row-by-row shifting pulse control signal shifts represents a pixel circuit in the row that the gate driver on array GOA scans. When the gate driver on array GOA scans a pixel circuit in a row, the output gate control signal is sent to a selection switching transistor of the pixel circuit in the row, and then, the selection switching transistor is turned on. In this way, the gate driver on array GOA can implement a row-by-row ultrasonic echo signal collecting function.

The column selection circuit (Column Selection Area, CSA) is configured to collect electrical signals in pixel circuits in different columns. The column selection circuit provides a gate control signal for the read switching transistor in the pixel circuit. Under the action of the gate control signal output by the column selection circuit, the read switching transistor switches between an on state and an off state, and the on state and the off state of the read switching transistor affect connection and disconnection of a pixel circuit in this column. The pixel circuit is connected only when the selection switching transistor and the read switching transistor that are in the pixel circuit are simultaneously turned on.

All the pixel circuits in the pixel pixel unit array are equally divided into eight parts based on columns, and quantities of pixel circuits included in all the parts are equal. If a quantity NUM of columns in the pixel circuits in the pixel pixel unit array is not a multiple of 8, a quantity of pixel circuits included in each of the first seven parts is NUM/8, and a quantity of pixel circuits included in the eighth part is NUM%8+NUM/8.

The column selection circuit mainly includes a 38 decoder (Decoder 3 Translate 8, DEC 3T8) and a multiplexer (Multiplexer, Mux).

An internal circuit structure of the 38 decoder includes a NAND gate, a NOR gate, and two NOT gates. Three input end signals of the 38 decoder are respectively a first input signal end INB0, a second input signal end INB1, and a third input signal end INB2. Input level values of the first input signal end INB0, the second input signal end INB1, and the third input signal end INB2 include eight selection cases: 000, 001, 010, 011, ..., 110, and 111, which respectively correspond to the eight equal column parts obtained by dividing M columns of pixel circuits in the pixel pixel unit array. Output signals of eight output ends Vo1, Vo2, Vo3, ..., and Vo8 of the 38 decoder are respectively used to control connection or disconnection of pixel circuits in corresponding equal column parts.

The multiplexer is configured to: select, from the eight equal column parts, a pixel circuit in an equal column part to be read, and output an electrical signal in the pixel circuit in the equal column part as an output signal of the multiplexer to a subsequent imaging chip CMOS for signal reading.

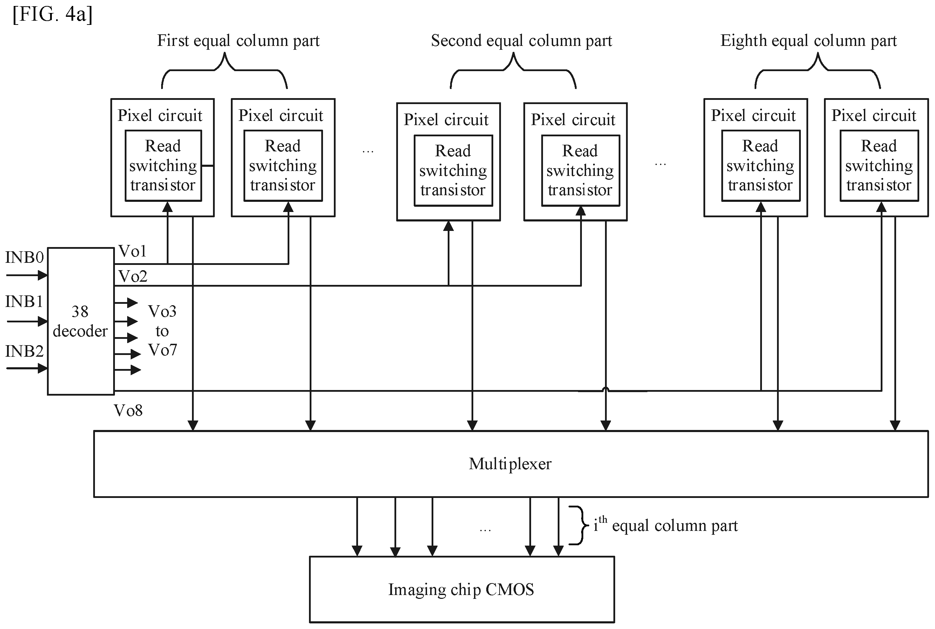

As shown in FIG. 4a, each of the eight output ends of the 38 decoder is coupled to read switching transistors of all pixel circuits in a same equal column part corresponding to the output end, and is configured to control on or off of the read switching transistors, to affect connection or disconnection of the pixel circuits. For example, a first output end Vo1 of the 38 decoder is coupled to read switching transistors of all pixel circuits in a first equal column part. When input level values of the first input signal end INB0, the second input signal end INB1, and the third input signal end INB2 are 000, the first output end Vo1 of the 38 decoder is valid. In addition, all the read switching transistors of all the pixel circuits in the first equal column part that are coupled to the first output end Vo1 are turned on. In this case, if selection switching transistors of some pixel circuits in the first equal column part are also exactly turned on via the gate control signal provided by the gate driver on array GOA, the pixel circuits are completely connected to operate, a current signal in the pixel circuits is transmitted to a subsequent imaging chip CMOS for reading, and finally a fingerprint grayscale image is formed. Effective fingerprint recognition can be implemented by comparing the fingerprint grayscale image with existing fingerprint data.

In conclusion, for the pixel pixel unit array including the pixel circuits in N rows and M columns, the gate driver on array GOA first selects to-be-read pixel circuits in an i^{th} row (0≤i≤N, and the pixel circuits are sequentially selected from the first row to an N^{th} row for reading), to provide the gate control signal for selection switching transistors in the pixel circuits in the row, so that all the selection switching transistors in the pixel circuits in the row are turned on. Then, the 38 decoder selects to-be-read equal column parts (which are sequentially selected from the first equal column part to the eighth equal column part for reading), that is, which columns of pixel circuits need to be read. The 38 decoder provides the gate control signal for read switching transistors in pixel circuits in the selected equal column part, so that all the read switching transistors in the pixel circuits in the equal column part are turned on. The pixel circuit is connected when and only when both the selection switching transistor and the read switching transistor in the pixel circuit are turned on, and then, an electrical signal in the pixel circuit is transmitted to the imaging chip CMOS for reading.

The following describes circuit timing designed in this substrate circuit solution.

In the pixel pixel unit array, in each selection cycle, only a pixel circuit in one row is selected, and the pixel circuits are sequentially read from the first row to the N^{th} row. After a pixel circuit in one row is selected, pixel circuits in all equal column parts are sequentially selected, and the pixel circuits are sequentially read from the first equal column part to the eighth equal column part.

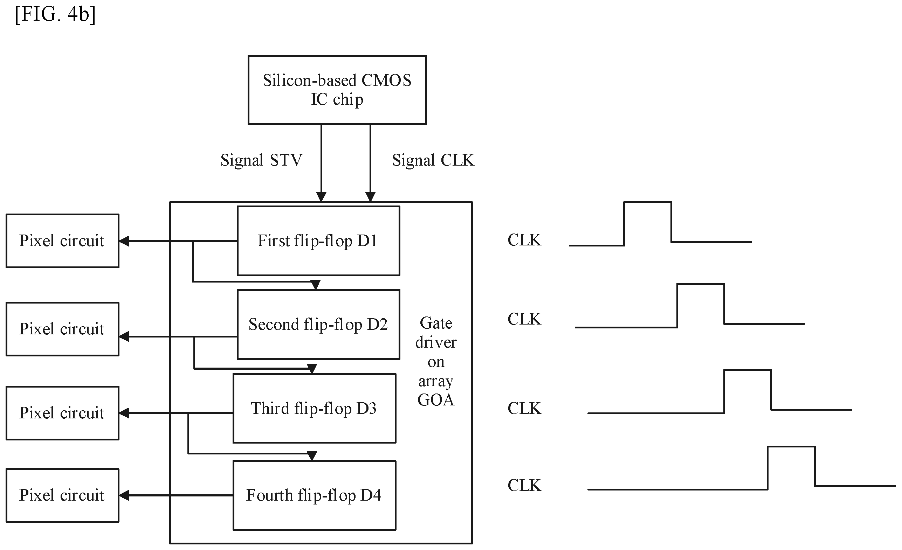

As shown in FIG. 4b, first, a silicon-based CMOS IC inputs a start signal STV and a clock signal CLK to the gate driver on array GOA. After the gate driver on array GOA receives the valid start signal STV and clock signal CLK, a first flip-flop D1 starts to output a valid control signal to the pixel circuit in the first row. A gate of a selection switching transistor in the pixel circuit in the first row receives the valid control signal, and then is turned on.

After the pixel circuit in the first row is selected, the silicon-based CMOS IC inputs a start signal STV and a clock signal CLK to a column selection circuit, to sequentially read electrical signals in the first column to the M^{th} column in the pixel circuits in the first row. After all the electrical signals of the pixel circuits in the first row are completely read, the valid control signal output by the first flip-flop D1 in the gate driver on array GOA is transmitted to an input end of a second flip-flop D2, and then, the second flip-flop D2 outputs the valid control signal to a pixel circuit in a second row. In addition, an output end of the first flip-flop D1 outputs an invalid level. That is, the pixel circuit in the first row and the first flip-flop D1 enter an off state, and the pixel circuit in the second row and the second flip-flop D2 enter an on state.

Similarly, after the pixel circuit in the second row is selected, the silicon-based CMOS IC inputs a start signal STV and a clock signal CLK to the column selection circuit, to sequentially read electrical signals in the first column to the M^{th} column in the pixel circuits in the second row. Finally, all the electrical signals of the pixel circuits in the second row are read. By analogy, signals of all the pixel circuits in the entire pixel pixel unit array are finally read.

FIG. 4b is diagram of a timing signal of the gate driver on array GOA in the technical solution. In this technical solution, each clock signal of all flip-flops in the gate driver on array GOA uses a fixed cycle. In addition, in each time of selection and reading of the pixel circuits in the equal column parts, the clock signal of the column selection circuit also uses a fixed cycle. For example, clock cycles of all the flip-flops in the gate driver on array GOA are t₀, and a clock cycle of the column selection circuit is n₀. For example, a quantity of pixel circuits in the pixel pixel unit array is 100*100. It is assumed that all columns are divided into 10 equal column parts. In this case, in each set of equal column part, signal reading of 10 columns of pixel circuits needs to be completed. Therefore, t₀≥10*n₀, and a total time for completing reading of an entire fingerprint signal is 100*t₀.

However, in a current solution, both a clock cycle of the gate driver on array GOA and a clock cycle of the column selection circuit use fixed duration, and it needs to be ensured that the imaging chip CMOS can successfully complete signal reading of the pixel circuit in a specific clock cycle. Therefore, a long operating clock cycle is usually set for both the gate driver on array GOA and the column selection circuit. As a result, a large quantity of timing resources are consumed, especially for an invalid region that is not touched by a fingerprint of a finger.

Based on the idea of the design solution, electrical signals of the pixel circuits in the first row to the N^{th} row and in the first column to the M^{th} column need to be read in an all-round manner. In an application scenario of small-area fingerprint information reading, for example, in a pixel pixel unit array, there are 100 rows of pixel circuits and 100 columns of pixel circuits. The 100 columns of pixel circuits are divided into 10 equal column parts. In each equal column part, 10 columns of pixel circuits need to be read. It is assumed that it takes 5 µs to read the pixel circuits in each equal column part. In this case, time required for reading each row of pixel circuits is 50 µs, and time required for reading the 100 rows of pixel circuits is 5 ms.

However, for large-area fingerprint information reading, a large quantity of timing resources need to be consumed because a large area needs to be read. For example, in large-area fingerprint information reading application, a pixel pixel unit array usually includes 300*200 pixel circuits. 10 columns of pixel circuits are still grouped into one equal column part, and there are 20 equal column parts in total. It is assumed that it still takes 5 µs to read the pixel circuits in each equal column part. In this case, it takes 100 µs to read all columns of pixel circuits in a same row. That is, it takes 100 µs to read one row of pixel circuits. Because there are 300 rows of pixel circuits in total, it takes 30 ms in total to read the entire pixel pixel unit array.

It can be learned that time required is much longer than that of small-area fingerprint recognition. In addition to a large quantity of pixel circuits that need to be read, in large-area fingerprint information reading application, an algorithm operation like multi-frame fusion needs to be performed. Consequently, large-area fingerprint reading requires longer time and more time, and efficiency of large-area fingerprint recognition is reduced.

Actually, in actual unlocking, there is no need to read signals in all pixel circuits in an entire large-area region.

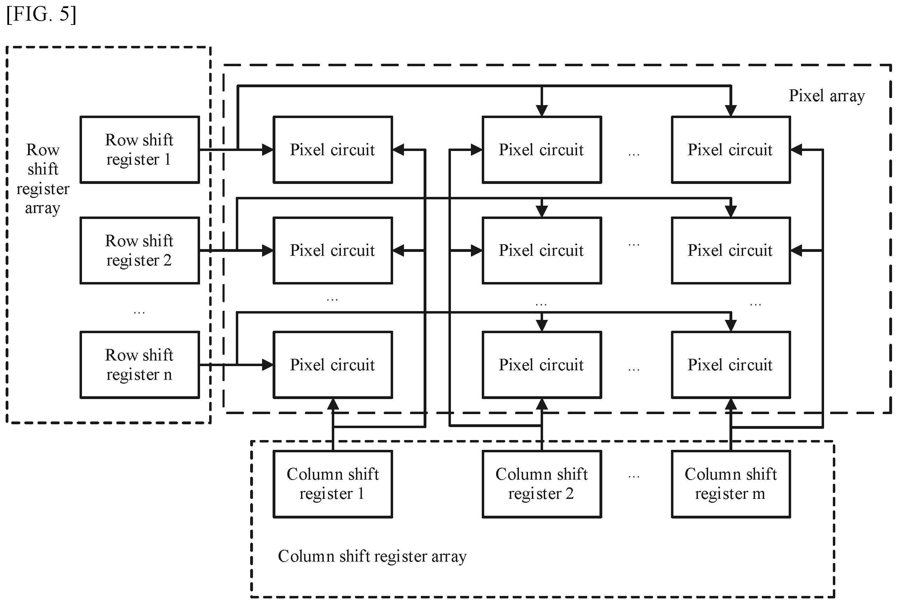

In view of this, an embodiment of this application provides a new structure design solution for a substrate circuit, as shown in FIG. 5. A pixel array, a row shift register array, and a column shift register array are included. According to the substrate circuit provided in this embodiment of this application, a pixel circuit region that needs to be read and a pixel circuit region that does not need to be read are distinguished in a targeted manner based on a touch range of a fingerprint of a finger. In addition, for different pixel circuit regions, the row shift register array and the column shift register array use different operating clock cycles, thereby saving a large quantity of timing resources, and implementing efficient reading of large-area fingerprint information.

The row shift register array includes N row shift registers, each of the N row shift registers includes at least one output end, and is configured to output a row selection signal, the row shift register operates in at least two different clock cycles, and N is a positive integer.

The column shift register array includes M column shift registers, each of the M column shift registers includes at least one output end, and is configured to output a column selection signal, the column shift register operates in at least two different clock cycles, and M is a positive integer.

The pixel array may include a plurality of pixel circuits in N rows and M columns. As shown in FIG. 5, pixel circuits in all the rows are coupled to output ends of all the row shift registers in one-to-one correspondence, and a pixel circuit in each row is configured to receive a row selection signal of a correspondingly coupled row shift register. When and only when a row selection signal of a row shift register coupled to pixel circuits in this row is valid, electrical signals in the pixel circuits in the row are sequentially read by a read circuit.

Pixel circuits in all the columns are coupled to output ends of all the column shift registers in one-to-one correspondence, and a pixel circuit in each column is configured to receive a column selection signal of a correspondingly coupled column shift register.

The substrate circuit further includes a read circuit array, the read circuit array includes a plurality of read circuits in the N rows and the M columns, all the read circuits are coupled to all the pixel circuits in one-to-one correspondence, and the read circuit reads an electrical signal in a correspondingly coupled pixel circuit under control of the row selection signal and the column selection signal.

First, pixel circuits in a row to be read are selected via a row selection signal of a row shift register, pixel circuits in a K^{th} row to be read are selected (K is any positive integer from 1 to N, and 1≤K≤N), and then, a pixel circuit that is in the K^{th} row and that is in a column is selected via a column selection signal of a column shift register for reading. It is assumed that, when a column selection signal of a column shift register coupled to a pixel circuit in an L^{th} column is valid, a read circuit reads an electrical signal in a pixel circuit that is in the K^{th} row and that is in the N^{th} column.

The following provides analysis and example descriptions with reference to a specific structure of a pixel circuit.

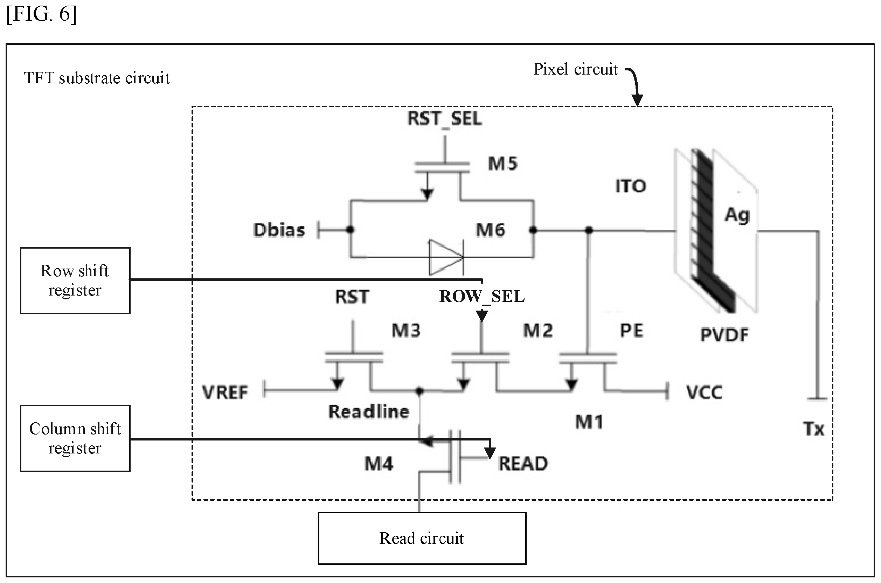

FIG. 6 shows an example of a structure of a pixel circuit according to an embodiment of this application. The pixel circuit includes an ultrasonic wave transceiver module, a reading module, and a setting module.

The ultrasonic wave transceiver module includes a fifth transistor M5, a diode M6, and a PVDF piezoelectric thin film. Two electrodes of the PVDF piezoelectric thin film are respectively an ITO electrode and an Ag electrode. The ITO electrode is coupled to both a cathode of the diode M6 and a second electrode of the fifth transistor M5.

The reading module includes a first transistor M1, a second transistor M2, and a fourth transistor M4. A gate PE end of the first transistor M1 is coupled to the ITO electrode, and a first electrode of the second transistor M2, a first electrode of the fourth transistor M4, and a second electrode of a third transistor M3 are coupled.

The setting module includes the third transistor M3. The second electrode of the third transistor M3 is coupled to both the first electrode of the fourth transistor M4 and the first electrode of the second transistor M2.

It should be noted that the example of the structure of the pixel circuit provided in this embodiment of this application is merely for explanation and description, and further describes the objective, technical solutions, and beneficial effect of the present invention in detail. It should be understood that the structure of the pixel circuit is merely a specific implementation of the present invention, and is not intended to limit the protection scope of the present invention. Any modification, equivalent replacement, improvement, or the like made to the pixel circuit based on the technical solutions of the present invention shall fall within the protection scope of the present invention.

Operating timing of the pixel circuit may be divided into three phases: an ultrasonic wave emitting phase, an ultrasonic wave receiving phase, and a signal reading phase. In the three phases, a specific operating process of the pixel circuit is as follows:

### S1. Ultrasonic wave emitting phase

A reset signal RST_SEL is valid, the fifth transistor M5 is turned on, and a bias voltage Dbias is a fixed voltage of 3 V (for example, the voltage may be correspondingly adjusted based on a subsequent circuit requirement). A fixed level of the bias voltage Dbias is transmitted to the ITO electrode via the fifth transistor M5. Therefore, the ITO electrode is also at the fixed level. In this case, an alternating current voltage signal Tx with a fixed frequency and a variable amplitude is applied to the Ag electrode of the PVDF piezoelectric thin film. Therefore, the alternating current voltage signal with the fixed frequency and the variable amplitude exists between the Ag electrode and the ITO electrode. In addition, under the action of the alternating current voltage signal with the variable amplitude, a variable electric field is formed between the Ag electrode and the ITO electrode, and a change frequency of the electric field is the same as a change frequency of the alternating current voltage signal Tx.

The PVDF piezoelectric thin film has piezoelectric effect and inverse piezoelectric effect. Under the action of the variable electric field, the PVDF piezoelectric thin film generates periodic vibration as the electric field changes, and a vibration frequency is consistent with the change frequency of the electric field. When the vibration frequency of the PVDF piezoelectric thin film is greater than 20 kHz, the periodic mechanical vibration generates an ultrasonic wave, which is propagated to surroundings. The emitted ultrasonic wave is transmitted, reflected, absorbed, or the like.

### S2. Ultrasonic wave receiving phase

When the ultrasonic wave is in contact with some media after being emitted, an ultrasonic reflection phenomenon occurs, which is referred to as an ultrasonic echo. A process of detecting the ultrasonic echo is a process of the ultrasonic wave receiving phase. In the ultrasonic wave receiving phase, the fifth transistor M5 is turned off, and the Ag electrode is grounded. Because an emitted ultrasonic wave signal is reflected on a surface of a finger, an ultrasonic echo signal Rx is formed. The ultrasonic echo signal Rx has the same frequency as the alternating current voltage signal Tx in the ultrasonic wave emitting phase, but has much lower signal strength. This is mainly because the ultrasonic wave is severely attenuated after being reflected by the medium.

When the ultrasonic echo signal Rx reflected by the finger reaches a surface of the PVDF piezoelectric thin film, sound intensity of the ultrasonic echo signal Rx generates a periodic mechanical force on the surface of the PVDF piezoelectric thin film. Due to the piezoelectric effect, the periodic mechanical force generates a periodic induced electrical signal on the ITO electrode of the PVDF piezoelectric thin film. At a moment when a voltage of the bias voltage Dbias increases from initial 3 V to 5 V, the diode M6 is turned on. In this case, the bias voltage Dbias is used to detect, via the diode M6, the periodic induced electrical signal generated on the ITO electrode, and then, a stable direct current voltage signal is generated at the gate PE end of the first transistor M1. The direct current voltage signal represents information about the periodic induced electrical signal on the ITO electrode and information about the ultrasonic echo signal. The ultrasonic wave receiving process is completed. The following is the electrical signal reading phase.

### S3. Signal reading phase

The electrical signal reading phase is further divided into three phases: readout reset (Read out RST), signal readout (Read out), and readout end (Read out End).

### S3.1. Readout RST phase:

This phase is an auxiliary phase before the readout phase. Because an ultrasonic induction region has a large area, electrical signals in the induction region can be led out only in four directions: up, down, left, and right through traces respectively, resulting in a long electrical connection trace and high parasitic capacitance of the trace. The parasitic capacitance directly affects transmission and transfer of charges on a readline trace, and further affects a transmission delay of the electrical signal. Therefore, before readout, the third transistor M3 on the readline trace needs to be turned on, and a voltage on the readline trace needs to be adjusted to a reset voltage VREF. In this case, the readout RST phase is completed, and the third transistor M3 is turned off.

It should be noted that time in the readout RST phase needs to be controlled as much as possible, and a next phase readout needs to be entered as soon as possible. This is mainly because the gate PE end of the first transistor M1 is coupled to the cathode of the diode M6 and the diode M6 has a reverse leakage current less than 1 pA. If the readout phase is not entered as soon as possible, the direct current voltage signal at the gate PE end of the first transistor M1 gradually decreases with time. Finally, in the readout phase, an electrical signal collected by a read circuit is distorted.

### S3.2. Readout phase

A pixel array may include pixel circuits in N rows. Pixel circuits in all the rows are coupled to output ends of all the row shift registers in one-to-one correspondence. Specifically, a gate ROW_SEL end of a second transistor M2 in a pixel circuit is correspondingly coupled to an output end of a row shift register. The row shift register outputs a row selection signal. Under control of the row selection signal, the second transistor M2 in the pixel circuit correspondingly coupled to the row shift register is turned on or off.

When a row selection signal output by a K^{th} row shift register is valid (K is any positive integer from 1 to N, and 1≤K≤N), all second transistors M2 in all pixel circuits in a K^{th} row that are coupled to the K^{th} row shift register are turned on.

The pixel array may include pixel circuits in M columns. Pixel circuits in all the columns are coupled to output ends of all the column shift registers in one-to-one correspondence. Specifically, a gate READ end of a fourth transistor M4 in a pixel circuit is correspondingly coupled to an output end of a column shift register. The column shift register outputs a column selection signal. Under control of the column selection signal, the fourth transistor M4 in the pixel circuit correspondingly coupled to the column shift register is turned on or off.

When a row selection signal output by an L^{th} row shift register is valid (L is any positive integer from 1 to M, and 1≤L≤M), all fourth transistors M4 in all pixel circuits in an L^{th} column that are coupled to the L^{th} row shift register are turned on.

When and only when both the second transistor M2 and the fourth transistor M4 in the pixel circuit (for example, a pixel circuit that is in the K^{th} row and that is in the L^{th} column) are turned on, an entire branch of the reading module (including the first transistor M1, the second transistor M2, and the fourth transistor M4) is connected. In this case, the voltage signal at the gate PE end of the first transistor M1 generates a transfer current Ids via the first transistor M1. The transfer current Ids is then output to the read circuit and a silicon-based processing chip via the second transistor M2 and the fourth transistor M4. A specific value of the voltage signal at the gate PE end of the first transistor M1 is obtained after collection via an analog-to-digital converter ADC (Analog to Digital Converter) circuit in the silicon-based processing chip. Further, the specific value is compared with a voltage value of a voltage signal collected by another pixel circuit, to determine whether a fingerprint corresponding to a pixel circuit signal at this point is a ridge line or a valley line. The voltage signal, collected by the pixel circuit, at the gate PE end of the first transistor M1 represents the information about the ultrasonic echo signal. An ultrasonic echo signal reflected in a valley line region has higher strength, and an ultrasonic echo signal reflected in a ridge line region has lower strength. Strength of induced electric signals generated when ultrasonic echo signals of different strength act on the ITO electrode is different. Correspondingly, strength of voltage signals, collected by different pixel circuits, at the gate PE end of the first transistor M1 is also different.

Different from an existing technical solution, in the process of reading the electrical signal in the pixel circuit, each of the row shift register and the column shift register operates in at least two different clock cycles.

Generally, in a large-area fingerprint reading process, a fingerprint of a finger cannot cover an entire induction region. Therefore, in a pixel circuit reading process, there is no need to read pixel circuits in all rows and all columns. For a pixel circuit in an effective induction region that is touched by the finger, the read circuit needs to read. However, for a pixel circuit in an ineffective induction region that is not touched by the finger, the read circuit does not need to perform any processing operation. In this way, time consumed in the large-area fingerprint reading process is shortened.

Therefore, for the effective induction region that needs to be read and that is touched by the finger, the row shift register and the column shift register operate in a long clock cycle, and respectively output a row selection signal and a column selection signal to the corresponding pixel circuit. The read circuit reads an electrical signal in the pixel circuit based on the row selection signal and the column selection signal. For the ineffective induction region that does not need to be read and that is not touched by the finger, the row shift register and the column shift register operates in a short clock cycle for fast iteration. In this case, the read circuit does not need to perform any operation.

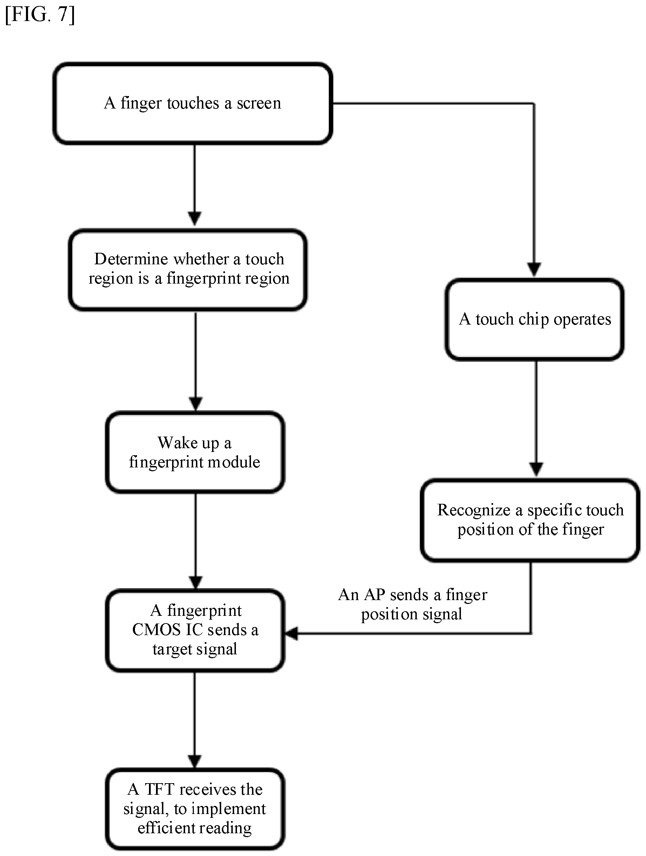

For example, the pixel array includes pixel circuits in N rows and M columns. FIG. 7 is an operating flowchart of a large-area fingerprint reading process according to an embodiment of this application. When a finger touches a screen, a touch chip first determines whether a touched region is a specific fingerprint induction region. If a touch position determined by the touch chip is the specific fingerprint induction region, the ultrasonic fingerprint recognition module 14 is woken up to operate. The touch chip recognizes a specific position touched by the finger, and sends information and coordinate information of the position touched by the finger to a fingerprint CMOS IC. The fingerprint CMOS IC recognizes, based on the information and the coordinate information of the position touched by the finger, which rows of pixel circuits and which columns of pixel circuits need to be read, and which rows of pixel circuits and which columns of pixel circuits do not need to be read; and generates different target signals for pixel circuits with different read requirements, and sends the target signals to the row shift register and the column shift register in a substrate circuit. The different target signals represent different operating clock cycle information. The row shift register and the column shift register in the substrate circuit receive the target signal sent by the fingerprint CMOS IC, to complete efficient reading of fingerprint information.

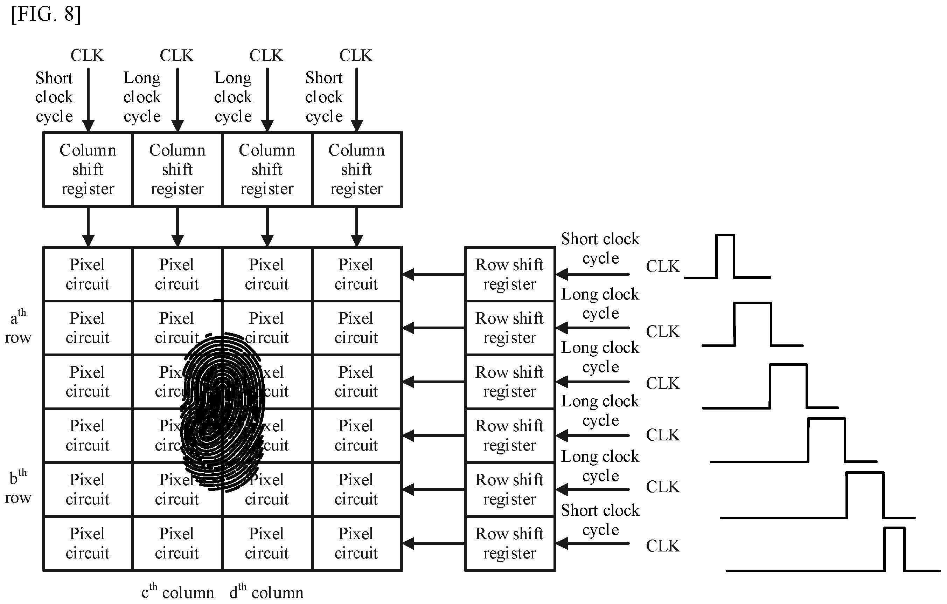

It is assumed that the effective induction region of the fingerprint of the finger covers only pixel circuits in an a^{th} row to a b^{th} row and in a c^{th} column and a d^{th} column. As shown in FIG. 8, the row shift register operates in two different clock cycles: a first clock cycle t1 and a second clock cycle t2. Time of the first clock cycle t1 is much shorter than time of the second clock cycle t2.

No fingerprint information of the finger exists in an induction region in which pixel circuits in a first row to the a^{th} row are located. Therefore, row shift registers correspondingly coupled to the pixel circuits in the first row to the a^{th} row operate in the first clock cycle t1. The read circuit does not need to read an electrical signal in the pixel circuit in this period of time. Therefore, the row shift register performs fast iterative shifting under the action of a high-frequency and short-cycle clock.

The fingerprint information of the finger exists in an induction region in which pixel circuits in the a^{th} row to the b^{th} row are located. Therefore, row shift registers correspondingly coupled to the pixel circuits in the a^{th} row to the b^{th} row operate in the second clock cycle t2. In this period of time, the read circuit sequentially reads, based on row selection signals of the row shift registers and column selection signals of column shift registers, electrical signals of pixel circuits in columns and rows that are covered by the fingerprint information of the finger. Therefore, the row shift register needs to operate in a long clock cycle, to ensure that the read circuit reads, in a single clock cycle, the electrical signals in the pixel circuits that need to be read.

No fingerprint information of the finger exists in an induction region in which pixel circuits in the b^{th} row to an N^{th} row are located. Therefore, row shift registers correspondingly coupled to the pixel circuits in the b^{th} row to the N^{th} row operate in the first clock cycle t1. The read circuit does not need to read an electrical signal in the pixel circuit in this period of time. Therefore, the row shift register performs fast iterative shifting under the action of a high-frequency and short-cycle clock.

Similarly, as shown in FIG. 8, the effective induction region covered by the fingerprint of the finger is the pixel circuits in the a^{th} row to the b^{th} row and in the c^{th} column and the d^{th} column. The column shift register also operates in two different clock cycles: a third clock cycle t3 and a fourth clock cycle t4. Time of the third clock cycle t3 is much shorter than time of the fourth clock cycle t4.

No fingerprint information of the finger exists in an induction region in which pixel circuits in a first column to the c^{th} column are located. Therefore, column shift registers correspondingly coupled to the pixel circuits in the first column to the c^{th} column operate in the third clock cycle t3. The read circuit does not need to read an electrical signal in the pixel circuit in this period of time. Therefore, the column shift register performs fast iterative shifting under the action of a high-frequency and short-cycle clock.

The fingerprint information of the finger exists in an induction region in which pixel circuits in the c^{th} column and the d^{th} column are located. Therefore, column shift registers correspondingly coupled to the pixel circuits in the c^{th} column and the d^{th} column operate in the fourth clock cycle t4. In this period of time, the read circuit sequentially reads, based on row selection signals of row shift registers and column selection signals of the column shift registers, electrical signals of pixel circuits in columns and rows that are covered by the fingerprint information of the finger. Therefore, the column shift register needs to operate in a long clock cycle, to ensure that the read circuit reads, in a single clock cycle, the electrical signals in the pixel circuits that need to be read.

No fingerprint information of the finger exists in an induction region in which pixel circuits in the c^{th} column to an M^{th} column are located. Therefore, column shift registers correspondingly coupled to the pixel circuits in the c^{th} column to the M^{th} column operate in the third clock cycle t3. The read circuit does not need to read an electrical signal in the pixel circuit in this period of time. Therefore, the column shift register performs fast iterative shifting under the action of a high-frequency and short-cycle clock.

After the solution provided in this embodiment of this application is used, time for large-area fingerprint information recognition can be greatly shortened. This is because a large-area fingerprint usually has thousands or even hundreds of thousands of pixels. If a conventional solution is used, the row shift register and the column shift register need to scan from beginning to end, to complete reading of one frame of fingerprint image. However, a coverage area of the fingerprint information of the finger is limited, and usually cannot cover the entire induction region. Consequently, when the shift register scans the ineffective induction region that is not touched by the finger, a large quantity of timing resources are consumed.

If the solution provided in this embodiment of this application is used, the read circuit only needs to read an electrical signal in a pixel circuit in a region touched by the finger. For a pixel circuit in a region that is not touched by the finger, each of a row shift register and a column shift register that are coupled to the pixel circuit uses a short clock cycle. For a pixel circuit in a region touched by the finger, each of a row shift register and a column shift register that are coupled to the pixel circuit uses a long clock cycle, so that the read circuit sequentially reads electrical signals in pixel circuits in the region.

### S3.3. Readout end phase

After an electrical signal in a current pixel circuit is collected, a second transistor M2 and a fourth transistor M4 are turned off, and the readout end phase is entered, to prepare to enter a collection cycle of a next pixel circuit. After a period of the five phases, all signals in all pixel circuits are gradually collected.

An embodiment of this application provides an ultrasonic fingerprint recognition module, including the substrate circuit in the related embodiments shown in FIG. 5 to FIG. 8 and an adhesive layer. The adhesive layer is coupled to the substrate circuit.

An embodiment of this application further provides an electronic device. The electronic device includes a display and the ultrasonic fingerprint recognition module in the related embodiment shown in FIG. 2, and when recognizing a touch operation performed on the display, the electronic device recognizes fingerprint information via the ultrasonic fingerprint recognition module. The ultrasonic fingerprint recognition module may be located inside or under the display. This is not specifically limited in this application.

It should be understood that, for beneficial effect of the ultrasonic fingerprint recognition module or the electronic device provided in embodiments of this application, refer to the substrate circuit in the related embodiments shown in FIG. 2 to FIG. 8. Details are not described herein again.

An embodiment of this application further provides an apparatus, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the operation method of an image sensor in the foregoing embodiments.

In the foregoing embodiments, the descriptions of the embodiments have respective focuses. For a part that is not described in detail in an embodiment, refer to related descriptions in another embodiment.

Based on the descriptions of the foregoing implementations, a person skilled in the art may understand that, for a purpose of convenient and brief description, division into the foregoing functional modules is used as an example for description. In an actual application, the foregoing functions may be allocated to different functional modules for completion based on a requirement. In other words, an inner structure of an apparatus is divided into different functional modules to complete all or some of the functions described above.

It should be noted that, for brief description, the foregoing method embodiments are represented as a series of actions. However, a person skilled in the art should appreciate that this application is not limited to the described order of the actions because some steps may be performed in another order or simultaneously according to this application. It should be further appreciated by a person skilled in the art that embodiments described in this specification are all example embodiments, and the related actions and modules are not necessarily required by this application.

In the several embodiments provided in this application, it should be understood that the disclosed apparatus and method may be implemented in another manner. For example, the described apparatus embodiments are merely examples. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual coupling or direct coupling or communication connection may be implemented through some interfaces. The indirect coupling or communication connection between the apparatuses or units may be implemented in an electrical form, in a mechanical form, or in another form.

The units described as separate parts may or may not be physically separate, and parts displayed as units may be one or more physical units, that is, may be located at one location, or may be distributed at different locations. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A substrate circuit, comprising a row shift register array, a pixel array, and a column shift register array, wherein
the row shift register array comprises N row shift registers, each of the N row shift registers comprises at least one output end, and is configured to output a row selection signal, the row shift register operates in at least two different clock cycles, and N is a positive integer;
the column shift register array comprises M column shift registers, each of the M column shift registers comprises at least one output end, and is configured to output a column selection signal, the column shift register operates in at least two different clock cycles, and M is a positive integer; and
the pixel array comprises a plurality of pixel circuits in N rows and M columns, pixel circuits in all the rows are coupled to output ends of all the row shift registers in one-to-one correspondence, a pixel circuit in each row is configured to receive a row selection signal of a correspondingly coupled row shift register, pixel circuits in all the columns are coupled to output ends of all the column shift registers in one-to-one correspondence, and a pixel circuit in each column is configured to receive a column selection signal of a correspondingly coupled column shift register.

2. The substrate circuit according to claim 1, wherein the substrate circuit further comprises a read circuit array, the read circuit array comprises a plurality of read circuits in N rows and M columns, all the read circuits are coupled to all the pixel circuits in one-to-one correspondence, and the read circuit reads an electrical signal in a correspondingly coupled pixel circuit under control of the row selection signal and the column selection signal.

3. The substrate circuit according to claim 1 or 2, wherein in pixel circuits in the N rows, for a row that does not need to be read by the read circuit, an operating clock cycle of the row shift register is t0; and in the pixel circuits in the N rows, for a row that needs to be read by the read circuit, an operating clock cycle of the row shift register is t1, wherein a value of the clock cycle t0 is less than that of the clock cycle t1.

4. The substrate circuit according to any one of claims 1 to 3, wherein in pixel circuits in the M columns, for a column that does not need to be read by the read circuit, an operating clock cycle of the column shift register is t2; and in the pixel circuits in the M columns, for a column that needs to be read by the read circuit, an operating clock cycle of the column shift register is t3, wherein a value of the clock cycle t2 is less than that of the clock cycle t3.

5. The substrate circuit according to any one of claims 1 to 4, wherein the substrate circuit is a thin-film field effect transistor TFT substrate circuit, and each switching transistor is a thin-film field effect transistor TFT; or
the substrate circuit is a metal oxide transistor CMOS substrate circuit, and each switching transistor is a metal oxide transistor CMOS.

6. The substrate circuit according to any one of claims 1 to 5, wherein the pixel circuit comprises a first electrode and a plurality of transistors.

7. The substrate circuit according to any one of claims 1 to 6, wherein the row shift register comprises a flip-flop, a NAND gate, and an inverter.

8. The substrate circuit according to any one of claims 1 to 7, wherein a coupling manner of a circuit structure of the column shift register is consistent with a coupling manner of a circuit structure of the row shift register.

9. The substrate circuit according to any one of claims 1 to 8, wherein an operating phase of the pixel circuit is divided into an ultrasonic wave emitting phase, an ultrasonic wave receiving phase, and a signal reading phase.

10. The substrate circuit according to any one of claims 1 to 9, wherein in the signal reading phase of the pixel circuit, when both the row selection signal of the row shift register and the column selection signal of the column shift register are valid, the read circuit reads the electrical signal in the correspondingly coupled pixel circuit.

11. An ultrasonic fingerprint recognition module, comprising the substrate circuit according to any one of claims 1 to 10 and an adhesive layer, wherein the adhesive layer is coupled to the substrate circuit.

12. An electronic device, comprising the ultrasonic fingerprint recognition module according to claim 11 and a display, wherein when recognizing a touch operation on the display, the electronic device recognizes fingerprint information via the ultrasonic fingerprint recognition module.
